# EUROPÄISCHE PATENTSCHRIFT

(11) **EP 1 391 617 B1**
(45) Veröffentlichungstag und Bekanntmachung des Hinweises auf die Patenterteilung: **09.02.2005**
(21) Anmeldenummer: 03017641.6
(22) Anmeldetag: 12.08.2003
(51) Int. Cl.: F16B 39/30

(54) **Mit selbstklemmendem Gewinde versehene Schraube**
Screw with self-locking thread
Vis à filetage autobloquant

(30) Priorität: 20.08.2002 DE 10238055
(43) Veröffentlichungstag der Anmeldung: 25.02.2004
(73) Patentinhaber: EJOT GmbH & Co. KG, 57334 Bad Laasphe (DE)
(72) Erfinder: Koenig, Gottfried, Dr., 57334 Bad Laasphe (DE); Menz, Werner, 99897 Tambach-Dietharz (DE)
(74) Vertreter: Bardehle, Heinz, Dipl.-Ing.

(56) Entgegenhaltungen:
- DE-A- 2 457 143
- US-A- 3 027 042
- US-A- 3 520 344

## Beschreibung

Die Erfindung bezieht sich auf eine mit selbstklemmendem, gewalztem Gewinde versehene Schraube, deren Gewinde an mehreren Stellen ihres Verlaufs gegenüber dem normalen Gewindequerschnitt dadurch verformt ist, dass der Gewindeaussendurchmesser durch radiale Stauchung von begrenzten Gewindeabschnitten verringert ist, wobei die Fläche des Gewindequerschnitts derjenigen des unverformten Gewindes im Wesentlichen gleich ist.

Schrauben mit selbstklemmendem Gewinde sind in vielfacher Form bekannt. So sind die Gewindegänge eines Aussengewindes umlaufend um den Gewindegrund in axialer Richtung vom Kopfende weggebogen, um damit gegenüber einem Innengewinde eine besondere Reibung zu erzeugen (DE-OS 2062342). Die DE-OS 2257112 beschreibt eine als Rippe bezeichnete Deformation des Gewindeganges eines Aussengewindes, die sich nur über einen Teil eines Gewindeganges erstreckt. Bei einem in der DE-PS 1575259 beschriebenen selbstsichernden Gewinde ist umlaufend um den Gewindegrund der Flankenwinkel bei gerade verlaufenden Flanken von Gewindegang zu Gewindegang verändert. Wie die DE-PS 1750206 zeigt, ist auch schon vorgeschlagen worden, umlaufend um den Gewindegrund die Profildicke des Sicherungsbereiches des Gewindes zu vergrößern. In die gleiche Richtung tendiert der Vorschlag gemäß der DE-PS 1500981, gemäß der der Sicherungsabschnitt eines Gewindes einen vergrößerten Kerndurchmesser bei verringertem Aussendurchmesser vorsieht.

Schließlich sei noch die DE-PS 3743010 erwähnt, gemäß der bei einem Aussengewinde der Sicherungsbereich über eine Mehrzahl von Gewindegängen dadurch geschaffen wird, dass in dem Sicherungsbereich die Gewindespitzen radial nach innen gedrückt sind, wobei im Querschnitt eine rechteckförmige Gestaltung im Bereich der Gewindespitzen entsteht, durch die das Gesamtvolumen des Gewindes erhalten bleibt.

Bei den bisher bekannten Schrauben mit selbstklemmendem Gewinde musste wegen der Gestaltung des Sicherungsteils in erheblichem Umfang eine plastische Verformung beim Eindrehen der Schraube entweder des Muttergewindes oder des Gewindes des Sicherungsteils in Kauf genommen werden, was insbesondere bei harten Materialien für die Schraube oder das Muttergewinde zu Schwierigkeiten führt. Der Erfindung liegt daher die Aufgabe zugrunde, eine mit einem selbstklemmenden Gewinde versehene Schraube so zu gestalten, dass ihr der Sicherung dienender begrenzter Gewindeabschnitt mit nur geringer Verformung des Muttergewindes und / oder des Schraubengewindes auskommt und der erforderliche Widerstand zur Erzeugung eines ausreichend hohen Weiterdrehmoments durch möglichst großflächige Anlage zwischen Schraubengewinde und Muttergewinde erzielt wird.

Gelöst wird das Problem dadurch, dass unter Erhaltung der Schräglage der Gewindeflanken der Gewindequerschnitt symmetrisch im äußeren Bereich verbreitert und im anschließenden inneren Bereich verringert ist, wobei der Übergang vom verbreiterten zum verringerten Gewindequerschnitt etwa in der Mitte der betreffenden Gewindeflanke liegt, und dass sich der begrenzte Gewindeabschnitt über zwei Teile eines Gewindeganges derart erstreckt, dass sich zwei symmetrisch gegenüberliegende Gewindeabschnitte von jeweils etwa 1/6 des Gewindeganges ergeben.

Durch die Stauchung der Gewindegänge jeweils im Bereich des begrenzten Gewindeabschnitts und die dortige Verringerung des Gewindeaussendurchmessers wird für die Verbreiterung des Gewindequerschnitts im äußeren Bereich des Gewindeganges das notwendige Material beim Walzen der Schraube zur Verfügung gestellt, das dann besonders wirksam zu der vorstehend erwähnten grossflächigen Anlage in dem Bereich beiträgt, der diesbezüglich besonders wirksam ist, nämlich der äußere Bereich der Gewindegänge, wo der größte Widerstand gegen Weiterdrehen der Schraube aufgrund des dort gegebenen relativ großen Durchmessers besonders hoch ist. Um dabei den gewünschten Sicherungseffekt in hohem Maße zu erzielen, ist je nach Härte des Materials für die Schraube bzw. das Muttergewinde nur eine relativ geringe Vergrößerung des Gewindequerschnitts erforderlich, wodurch es möglich ist, bei der Verformung im Bereich des begrenzten Gewindeabschnitts bzw. des gegenüberstehenden Teils des Muttergewindes nur sehr geringe Verformungen zu erzielen, um die erforderliche Sicherheit zu gewährleisten. Mit der vorstehend genannten Gestaltung erzielt man also bei relativ geringem Aufwand für das Walzen der Schraube eine hohe Sicherheit gegen Weiterdrehen, das heißt die Schraube besitzt ein hohes Weiterdrehmoment.

Um das Weiterdrehmoment der Schraube wahlweise beeinflussen zu können, gestaltet man diese zweckmäßig so, dass der begrenzte Gewindeabschnitt an mehreren von einander beabstandeten Stellen der Schraube vorgesehen ist, wobei der Bereich des Gewindeanfangs von dem begrenzten Gewindeabschnitt freigehalten ist. Durch die letztere Gestaltung wird erreicht, dass das Eintreten der Schraube in ein Muttergewinde zunächst widerstandslos erfolgen kann, womit dann die Schraube geführt ist und erst dann auf den begrenzten Gewindeabschnitt zur Sicherung der Schraube trifft. Je mehr derartige begrenzte Gewindeabschnitte vorgesehen sind, umso höher ist dann das auf die Schraube auszuübende Weiterdrehmoment.

Zweckmäßig sieht man die Gewindegänge mit begrenzten Gewindeabschnitten unmittelbar nebeneinander vor, so dass in diesem Falle das Weiterdrehmoment entsprechend schnell erhöht wird.

Bei nebeneinander angeordneten Gewindegängen mit begrenzten Gewindeabschnitten werden diese Gewindeabschnitte von Gewindegang zu Gewindegang vorteilhaft um 90° gegeneinander versetzt, wodurch sich der Druck auf das Muttergewinde jeweils versetzt auswirkt, das heißt es wird ein Druck auf das Muttergewinde an winkelmäßig den gleichen Stellen, also an gegenüberliegenden Stellen, vermieden.

In den Figuren sind Ausführungsbeispiele der Erfindung dargestellt. Es zeigen:
- Figur 1: die Schraube in Seitensicht mit drei Gewindegängen, die mit den begrenzten Gewindeabschnitten versehen sind;
- Figur 2: einen Schnitt längs der Linie II-II aus Figur 1;
- Figur 3: einen Querschnitt durch die Gewindegänge der Schraube gemäß Figur 1 in vergrößerter Darstellung.

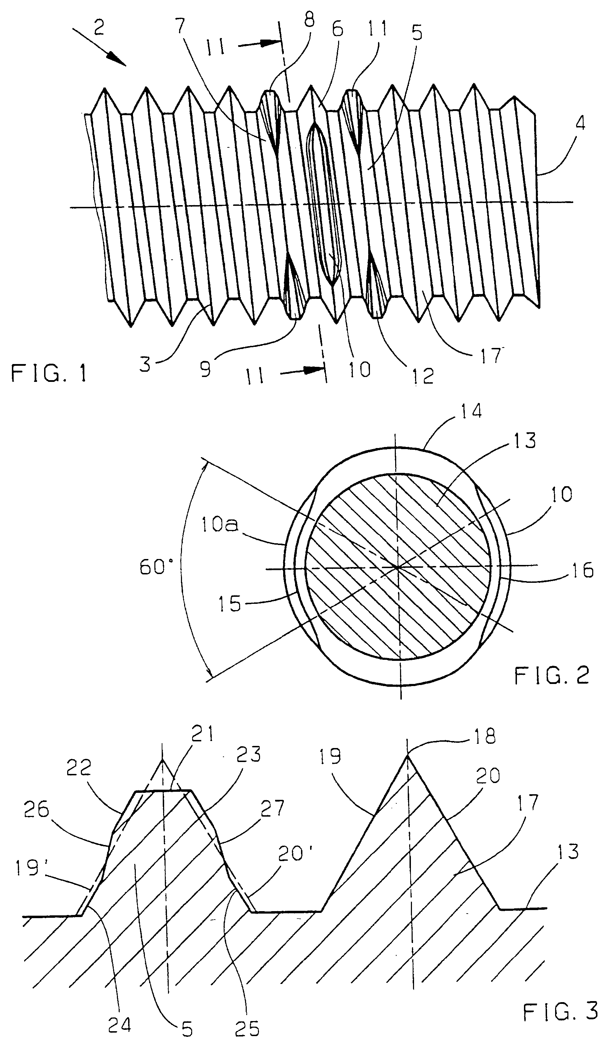

Die in der Figur 1 dargestellte Schraube weist, abgesehen von einem nicht dargestellten Schraubenkopf, den Schraubenschaft 2 auf, der durchgehend mit dem Gewinde 3 versehen ist, das sich also bis zu dem Gewindeanfang 4 erstreckt. In der vorderen Hälfte des Gewindes 3 sind die Gewindegänge 5, 6 und 7 dargestellt, die mit den begrenzten Gewindeabschnitten 8 und 9, 10 sowie 11 und 12 versehen sind. Die besondere Gestaltung dieser begrenzten Gewindeabschnitte wird im einzelnen an Hand der Figur 3 erläutert.

Die begrenzten Gewindeabschnitte 8, 9, 10, 11 und 12 dienen dazu, der Schraube beim Eindrehen in ein Muttergewinde eine gewünschte Selbstklemmung zu geben, wozu die begrenzten Gewindeabschnitte eine besondere Gestaltung aufweisen. Diese besteht unter anderem darin, dass im Bereich der begrenzten Gewindeabschnitte 8, 9, 10, 11 und 12 der Gewindeaussendurchmesser durch radiale Stauchung verringert ist. Auf die weiteren besonderen Gestaltungsmerkmale wird im Zusammenhang mit der Figur 3 näher eingegangen. Der sich an den Gewindeanfang 4 anschließende Bereich des Gewindes 3 ist von begrenzten Gewindeabschnitten freigehalten, so dass über diesen Bereich sich die Schraube problemlos in ein Muttergewinde eindrehen lässt und damit für das Weiterdrehen die notwendige Führung erhält.

In der Figur 2 ist ein Schnitt längs der Linie II-II aus Figur 1 dargestellt, wobei der Gewindekern 13 schraffiert gezeichnet ist, um den sich herum der Gewindegang 6 erstreckt, an dem sich die beiden begrenzten Gewindeabschnitte 10 und 10a befinden. Wie ersichtlich ist der Gewindeaussendurchmesser im Bereich der begrenzten Gewindeabschnitte 10 und 10a gegenüber dem Gewindeaussendurchmesser 14 im Bereich des Gewindeganges 6 verringert. Die im Bereich der begrenzten Gewindeabschnitte 10 und 10a eingezeichneten Linien stellen Übergänge 15 und 16 dar, auf die im Zusammenhang mit der Figur 3 näher eingegangen wird. Der Bereich der begrenzten Gewindeabschnitte 10 und 10a erstreckt sich jeweils etwa über 1/6 des gesamten Gewindeganges, das heißt hier über 60°.

In der Figur 3 ist der Querschnitt durch die Gewindegänge 5 und 17 gemäß Figur 1 dargestellt. Der Gewindegang 17 reicht bis zur maximalen Höhe 18 des Gewindeaussendurchmessers, seine beiden Flanken 19 und 20 verlaufen symmetrisch gradlinig zum Gewindekern 13. Der Gewindegang 5 besitzt einen gegenüber dem Aussendurchmesser 18 verringerten Aussendurchmesser 21, der durch Stauchung des Gewindeganges 5 erzielt ist. Aufgrund dieser Stauchung sind die Gewindeflanken im äußeren Bereich 22 und 23 erweitert und zwar unter Erhaltung der Schräglage der zum Gewindegang 17 gehörenden Gewindeflanken 19 und 20, die bei dem Gewindegang 5 gestrichelt als Linien 19' und 20' eingezeichnet sind. Im unteren Bereich des Gewindeganges 5 sind die Flanken 24 und 25 gegenüber den gestrichelten Linien 19' und 20' nach innen versetzt, das heißt der Gewindequerschnitt ist verringert. Der Übergang von dem äußeren Bereich 22, 23 zu dem inneren Bereich 24, 25 ist mit 26 und 27 bezeichnet. Dieser Übergang ist insbesondere bei kleineren Gewinden natürlich kürzer. Diese Übergänge 26 und 27 sind auch in Figur 2 als Linien 15 und 16 eingezeichnet. Die Übergänge 26 und 27 liegen so, dass sie etwa in der Mitte der Gewindeflanken des Gewindeganges 5 liegen. Dabei ist die Fläche des Gewindeabschnitts des gestauchten Gewindeganges 5 gegenüber derjenigen des Gewindeganges 17 trotz der Stauchung gleich geblieben.

## Patentansprüche

1. Mit selbstklemmendem gewalztem Gewinde (3) versehene Schraube, deren Gewinde (3) an mehreren Stellen ihres Verlaufs gegenüber dem normalen Gewindequerschnitt dadurch verformt ist, dass der Gewindeaussendurchmesser (21) durch radiale Stauchung von begrenzten Gewindeabschnitten (8 - 12) verringert ist, wobei die Fläche des Gewindequerschnitts derjenigen des unverformten Gewindes (3) im Wesentlichen gleich ist, **dadurch gekennzeichnet, dass** unter Erhaltung der Schräglage der Gewindeflanken (19, 20) der Gewindequerschnitt symmetrisch im äußeren Bereich (22, 23) verbreitert und im anschließenden inneren Bereich (24, 25) verringert ist, wobei der Übergang (26, 27) vom verbreiterten zum verringerten Gewindequerschnitt etwa in der Mitte der betreffenden Gewindeflanke liegt, und dass sich der begrenzte Gewindeabschnitt (8 - 12) über zwei Teile eines Gewindeganges (5, 6, 7) derart erstreckt, dass sich zwei symmetrisch gegenüberliegende Gewindeabschnitte (8 - 12) von jeweils etwa 1/6 des Gewindeganges (5, 6, 7) ergeben.

2. Schraube nach Anspruch 1, **dadurch gekennzeichnet, dass** der begrenzte Gewindeabschnitt (8 - 12) an mehreren voneinander beabstandeten Stellen der Schraube vorgesehen ist, wobei der Bereich des Gewindeanfangs (4) von dem begrenzten Gewindeabschnitt freigehalten ist.

3. Schraube nach Anspruche 1 oder 2, **dadurch gekennzeichnet, dass** die Gewindegänge (5, 6, 7) mit begrenzten Gewindeabschnitten (8 -12) unmittelbar nebeneinander mehrfach vorgesehen sind.

4. Schraube nach Anspruch 3, **dadurch gekennzeichnet, dass** bei nebeneinander angeordneten Gewindegängen (5, 6, 7) mit begrenzten Gewindeabschnitten (8 - 12) diese von Gewindegang zu Gewindegang um 90° gegeneinander versetzt sind.

## Claims

1. Screw provided with self-locking rolled thread (3), wherein, in a plurality of places along its extent, said thread (3) is deformed in relation to the normal thread cross section in that the thread outside diameter (21) is reduced by radial compression of limited thread portions (8 - 12), the area of the thread cross section being substantially identical to that of the undeformed thread (3), **characterized in that**, while maintaining the slant of the thread flanks (19, 20), the thread cross section is symmetrically widened in the outer region (22, 23) and reduced in the adjoining inner region (24, 25), the transition (26, 27) from the widened to the reduced thread cross section lying approximately in the centre of the respective thread flank, and **in that** the limited thread portion (8 - 12) extends over two parts of a thread turn (5, 6, 7) such that there result two symmetrically opposite thread portions (8 - 12) each of approximately 1/6 of the thread turn (5, 6, 7).

2. Screw according to claim 1, **characterized in that** the limited thread portion (8 - 12) is provided in a plurality of spatially separate places on the screw, the region of the thread beginning (4) being kept free from the limited thread portion.

3. Screw according to claim 1 or 2, **characterized in that** the thread turns (5, 6, 7) with limited thread portions (8 -12) are provided in plurality directly adjacent to each other.

4. Screw according to claim 3, **characterized in that** in the case of adjacent thread turns (5, 6, 7) with limited thread portions (8 - 12) the latter are offset by 90° in relation to each other from thread turn to thread turn.

## Revendications

1. Vis pourvue d'un filetage autobloquant laminé (3) et dont le filetage (3) est déformé en plusieurs endroits de son tracé par rapport à la section de filetage normale, de façon que le diamètre extérieur de filetage (21) soit réduit par écrasement radial de portions de filetage limitées (8 - 12), la surface de la section de filetage étant sensiblement égale à celle du filetage non déformé (3), **caractérisée en ce que**, tout en conservant l'inclinaison des flancs de filetage (19, 20), la section de filetage est élargie symétriquement dans la zone extérieure (22, 23) et rétrécie dans la zone intérieure adjacente (24, 25), la transition (26, 27) de la section de filetage élargie à la section de filetage réduite se trouvant sensiblement au milieu du flanc de filetage concerné, et **en ce que** la portion de filetage limitée (8 - 12) s'étend sur deux parties d'un pas de vis (5, 6, 7), de façon à obtenir deux portions de filetage symétriquement opposées (8 - 12) de chacune environ 1/6 du pas de vis (5, 6, 7).

2. Vis selon la revendication 1, **caractérisée en ce que** la portion de filetage limitée (8 - 12) est prévue en plusieurs endroits de la vis distants les uns des autres, la zone du début de filetage (4) étant exempte de portion de filetage limitée.

3. Vis selon la revendication 1 ou 2, **caractérisée en ce que** plusieurs pas de vis (5, 6, 7) à portions de filetage limitées (8 - 12) sont disposés immédiatement les uns à côté des autres.

4. Vis selon la revendication 3, **caractérisée en ce que**, lorsque des pas de vis (5, 6, 7) à portions de filetage limitées (8 - 12) sont disposés les uns à côté des autres, ces dernières sont décalées les unes par rapport aux autre de 90° d'un pas de vis à l'autre.
